# EUROPEAN PATENT SPECIFICATION

(11) **EP 4 031 410 B1**
(45) Date of publication and mention of the grant of the patent: **17.04.2024**
(21) Application number: 20772310.7
(22) Date of filing: 18.09.2020
(51) Int. Cl.: B60P 7/08

(54) **STRAP FITTING AND LASHING SYSTEM FOR SECURING LOADS**
GURTBEFESTIGUNGS- UND VERZURRSYSTEM ZUR SICHERUNG VON LASTEN
MONTURE SYSTÈME DE SANGLE ET D'ARRIMAGE POUR FIXER DES CHARGES

(30) Priority: 20.09.2019 NL 2023864
(43) Date of publication of application: 27.07.2022
(73) Proprietor: Cordstrap B.V., 5807 GA Oostrum (NL)
(72) Inventor: DIEDERIKS, Elmo, 5807 GA Oostrum (NL); NIEUWENKAMP, Jan Okke, 7555 RJ Hengelo (NL); RUSSCHER, Lambert, 7555 RJ Hengelo (NL)
(74) Representative: Brantsandpatents bv
(86) International application number: PCT/EP2020/076160
(87) International publication number: WO 2021/053174

(56) References cited:
- EP-A2- 1 544 031
- DE-A1-102013 007 313
- DE-U1- 20 212 871
- US-A1- 2017 320 427

## Description

### TECHNICAL FIELD

The invention pertains to the technical field of lashing systems for securing loads, and to strap fittings in particular.

### BACKGROUND

Lashing systems comprising straps and strap fittings (such as buckles) are well known for securing loads.

EP 1 980 169, for instance, discloses a buckle for securing a strap. The buckle comprises two side walls with multiple crossbars extending therebetween. Each of the crossbars is provided with a serration. The latter allows the strap to pass through, while biting into the strap with the least tension applied.

Such serrations may at first glance improve connectivity between strap and buckle. However, the strapping material will also experience local spikes in stress and strain, in the neighborhood of each serration. Therefore, more stringent mechanical requirements (in terms of yarn and or material tensile strength) will apply to the strapping material. Indeed, the strapping material should be able to withstand such locally increased values of stress and strain.

More generally, strapping material is over-dimensioned by default: it is typically much stronger than required for handling the loading forces only. In particular, the strapping material not only needs to withstand the loading force, but also the local peak stresses and strain, at its interfaces with strap fittings such as buckles. As such, it is never possible to fully exploit the capabilities of the strapping material. The required over-dimensioning of the strapping material boosts its overall production costs.

Apart from the above, US 4 493 135 further discloses a metal fitting for connection with flexible web slings. The fitting has two parallel sides, and a crossbar extending therebetween. The transverse cross-section of the crossbar defines a circular surface adjoining a flat surface. Moreover, the crossbar may also bulge transversely. The skilled person will recognize that such "bulges" have the advantageous effect of forcing straps into alignment, in case of self-centering buckles. At the same time, however, such bulges may locally increase stress and strain in a middle portion of the strap, as compared its strap edges. Again, more stringent mechanical requirements will apply (than required for handling the loading force only).

Other strap fittings are disclosed in DE 202 12 871, US 2017/320427 and EP 1 544 031.

The present invention aims to resolve at least some of the problems mentioned above. In particular, a lashing system is envisaged in which the full mechanical capabilities of the strap and/or of the strap fitting can be maximally exploited. Also, material and production costs in relation to straps and strap fittings should be reduced, and the lifetime of straps and strap fittings should be increased.

### SUMMARY OF THE INVENTION

To such end, the invention provides a strap fitting according to claim 1, configured for engaging a strap. In particular, a first support surface portion (of the inner crossbar) has a curvature that progressively increases, along an input sense for the strap. As is customary, the "(local) curvature" is herein defined as the reciprocal value of the "(local) radius of curvature".

Quite advantageously, this fitting overcomes traditional problems of local spikes in curvature stress and strain, acting on the strap. Generally, the strapping material needs to be over-dimensioned, as to be able to cope with such local spikes in stress and strain. The axial strain in the strapping material will gradually decrease, along the first support surface. In the present design, the local curvature is optimized such that the total strain present in the strapping material will be minimized, and will have a higher uniformity. Preferably, there are no spikes or peak values. Such a lashing can be loaded up to the System Break Strength (SBS), which will now better emulate the Linear Break Strength (LBS) of the strapping material itself. The strapping material is maximally exploited. In principle, the strapping material could be made lighter, thereby lowering its material and production costs.

A particular further advantage of a progressively increasing curvature, is that the overall crossbar cross-section is reduced in size (as compared to a crossbar of invariant, low curvature). Material and production costs in relation to the fitting can thus be lowered. Of course, it is important that the fitting can still withstand the lashing forces without breaking and/or plastically deforming.

In a preferred embodiment of claim 4, the inner crossbar has a surface portion of maximum curvature, adjoining the aforementioned first support surface portion. In doing so, the crossbar material is mostly contributing to the first support surface portion. The material and production costs related to the fitting are optimized.

In further aspects, the invention provides a lashing system according to claim 13, a lashing kit according to claim 14, and a method according to claim 15, for securing a load.

### DESCRIPTION OF FIGURES

**Figure 1A** shows a partial cut of a prior art lashing system comprising a strap and a fitting.
**Figures 1B-C** depict local strain along the course of the prior art strap shown in Fig. 1A, as obtained via simulation analyses performed by the present inventors.
**Figure 2** gives a perspective view on a ladder buckle, according to a possible embodiment of the invention.
**Figure 3A** gives a partial cross-sectional view on a lashing system, according to a possible embodiment of the invention.
**Figure 3B** schematically illustrates a strap fitting, more specifically a ladder buckle according to a possible embodiment, in cross-section.
**Figure 3C** schematically illustrates a strap-admitting portion of a fitting according to an alternative embodiment of the invention, in cross-section.
**Figure 3D** graphically illustrates the curvature along a cross-sectional contour of the inner and outer crossbars in **Fig. 3A-B**.
**Figures 4A-B** respectively show partial cuts of a prior art lashing system, and of a lashing system according to an embodiment of the invention.
**Figures 5A-B** show further, possible embodiments of strap fittings according to possible embodiments of the invention.

### DETAILED DESCRIPTION OF THE INVENTION

The present invention concerns a strap fitting, a lashing system, a lashing kit, and a method for securing a load.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

A "strap fitting", as used herein, is generally understood as a device providing an interface for straps. In particular, it is suitable for engaging at least one strap. To such purpose, the strap fitting is provided with at least one "strap-engaging portion". Preferably, latter strap-engaging portion comprises means for attaching a strap, and for adjusting the length of the strap so attached. Preferably, said means comprise one or more "crossbars" (= "rungs").

As is customary, the "curvature" is understood as the reciprocal value of the "radius of curvature". Thus, in case the radius of curvature is expressed in mm, the curvature itself is expressed in mm⁻¹. A progressively increasing curvature, along an input sense for the strap, is to be understood as a progressively decreasing radius of curvature, along said same input sense. Preferably said curvature gradually increases, between a lower "onset curvature" value, and a higher "end curvature" value.

The expression "% by weight", "weight percent", "%wt" or "wt%", here and throughout the description unless otherwise defined, refers to the relative weight of the respective component based on the overall weight of the formulation.

The inventors found that the breaking strength of the strap on its own (the so-called "Linear Breaking Strength", LBS) does generally not correspond to the breaking strength of a system which comprises latter strap, further engaged within a fitting (the so-called "System Breaking Strength", SBS). In various cases, the system breaking strength was found to be at least 12%, and up to 29% lower. Therefore, the system breaking strength is a critical characteristic for lashing systems. It inhibits full exploitation of the strapping material strength.

Further research uncovered that, at the strap-fitting interface, the local strain may be different in an outer surface section of the strap, as compared to the central section of the strap. In fact, the strapping material experiences two types of strain. Axial strain, on the one hand, is primarily due to the loading force. Curvature strain, on the other hand, is due to the strap being curved around a crossbar. The value of curvature strain mostly depends on the local curvature (and therefore on the local radius of curvature).

The central section of the strap is mostly subjected to axial strain. Curvature strain manifests itself more in the outer surface sections of the strap, wherever the strap is curved around a crossbar. It gives rise to local surplus spikes in strain, depending on the local curvature. The total strain in any section of the strap is the sum of axial strain and curvature strain. Of course, the total strain should always be lower than the failure strain, in all segments and sections of the strapping material. Therefore, local spikes in curvature strain are seriously limiting the extent to which the strapping material can be loaded.

In a first aspect, the invention provides a strap fitting configured for engaging a strap, which fitting comprises an inner crossbar and an outer crossbar, said crossbars extending between opposite side walls of the fitting, in which the inner and outer crossbar respectively have first and second support surface portions, which support surface portions face away from each other, and which support surface portions are configured for supporting portions of strap curving around said respective crossbars. In particular, said first support surface portion has a curvature that progressively increases, along an input sense for the strap. In other words: the local radius of curvature progressively decreases, along said same input sense. The curvature may gradually increase, from a lower "onset curvature" value, up to a higher "end curvature" value.

In any case, it is a major advantage that the onset curvature, where the strap first touches the inner crossbar, is relatively low. At this point, the axial strain in the strap is actually the highest (and mostly governed by the loading forces). Any local spikes in strain (e.g. due to a high local curvature) should thus be avoided.

In its course around the inner crossbar, along the first support surface, the strap will experience an axial strain that is continuously diminishing. Indeed, the loading force is gradually transferred towards the fitting, via mutual friction. At the same time, the curvature of the first support surface progressively increases. This means that, in contrast to the axial strain, the curvature strain is gradually increasing. The latter is mostly acting on the corresponding, outer surface section of the strap curving around said inner crossbar. The total strain, being the sum of axial and curvature strain, will thus be minimized and have a higher uniformity. The same strapping material, having the same breaking strain, will be able to handle a higher loading force, since it is loaded more uniformly. In other words, the system breaking strength is increased, for the same strapping material. Conversely, for the same loading force, the strapping material may be chosen lighter. It should for instance be possible to reduce the number of warp yarns in the strapping material. Material and production costs are lowered.

In theory it would also be possible to reduce curvature (and hence curvature strain) by increasing the overall cross-section of the crossbars, while maintaining e.g. a constant radius of curvature that is sufficiently low (constant low curvature = constant large radius). This however, would boost the material and production costs in relation to the fitting. Moreover, large and heavy fittings are difficult to handle. The current invention provides an elegant solution by means of a curvature that progressively increases. The overall crossbar cross-section can be made smaller, while ensuring that the total strain (axial + curvature) acting on the strap does not surpass its breaking strain. Material and production costs in relation to the fitting can thus be lowered. US 4 493 135, on the contrary, does not disclose a support surface portion having a progressively increasing curvature. It merely discloses a circular support surface portion. The above advantages do not apply.

The crossbars and sidewalls may or may not form an integral piece. The crossbars and sidewalls may or may not be integrally formed. Preferably, the crossbars are non-moveably and non-rotably affixed to the side walls.

The strap fitting may or may not comprise a serration and/or a surface roughening. Preferably, the first and second support surface portions are curved smoothly; they do not feature a serration. Alternatively, at least one of the first and second support surfaces is provided with a serration and/or a surface roughening. The latter may be beneficial in dynamic situations, avoiding slip of the strap in the buckle. The first support surface portion therein has a curvature that progressively increases, taken along the general contour of the crossbar cross-section. (Local) curvatures related to serrations, if any, are not taken into account.

The fitting may comprise one strap-admitting portion, or more than one strap-admitting portion. In particular, the fitting may be a ladder buckle comprising two strap-admitting portions (i.e. two side walls and four crossbars). However, the invention is in general not limited to such ladder buckles only.

In a further or alternative embodiment, both the first and second support surface portions have curvatures that progressively increase, in the same rotational sense. The above advantages can be repeated.

The first and second support surface portions may each have a curvature that steadily increases, starting from a corresponding "onset curvature" value, and up to a corresponding "end curvature" value. The onset of each support surface portion preferably corresponds to the location where a lashing portion of the strap is first supported by the fitting, in normal use. The end of each support surface portion preferably corresponds to the location where the strap has made a full 180° U-turn, when curving around the crossbar.

Preferably, the first and second support surface portions are comprised of substantially convex support surfaces having a steadily increasing curvature along their extension. The curvature of the first support surface may be chosen such that stress and strain in the outer section of the strap lashing portion are more or less constant. The curvature of the second support surface portion may be chosen such that it is non-critical to lashing stress and strain.

In a further or alternative embodiment, an end curvature of the first support surface portion is larger than, or at least equal to an onset curvature of the second support surface portion. A steady reduction of axial strain and buildup of curvature strain is thus resumed, once the strap has crossed from the first crossbar to the second crossbar. A sudden rise in curvature strain is particularly avoided.

In a further or alternative embodiment, the inner crossbar further has a surface portion of maximum curvature, which surface portion of maximum curvature adjoins said first support surface portion. A "surface portion of maximum curvature", as used herein, should be understood as comprising the maximum curvature (= the minimum radius of curvature) taken along the general contour of the crossbar cross-section. Curvatures related to serrations, if any, are not taken into account.

Preferably, latter surface portion immediately precedes the support surface portion. It does not contact the strapping material in normal use. It does not contribute to curvature strain. However, as will be clear from the added figures, such a surface portion allows for reducing the crossbar cross-section considerably.

In a further or alternative embodiment, the inner crossbar further has a surface portion of minimum curvature, which surface portion of minimum curvature adjoins said surface portion of maximum curvature. A "surface portion of minimum curvature", as used herein, should be understood as comprising the minimum curvature taken along the general contour of the crossbar cross-section. Curvatures related to serrations, if any, are not taken into account.

Preferably, latter surface portion immediately precedes the surface portion of maximum curvature. It does not contact the strapping material in normal use. It does not contribute to curvature strain. However, as will be clear from the added figures, such a surface portion provides a most convenient handling by maximizing the gap between the crossbars. This is particularly the case for flat surface portions of zero curvature (= infinite radius of curvature). Also, as will be clear from the added figures, such a surface portion allows for further reducing the crossbar cross-section considerably. This is particularly the case for concave surface portions of negative curvature (= opposite radius of curvature). The general invention is limited to none of both.

In a further or alternative embodiment, said surface portion of minimum curvature is a flat surface portion. Advantages are the design compatibility with production methods such as drop forging, while minimizing the crossbar cross-section, and while maximizing the intercrossbar gap.

In a further or alternative embodiment, the inner crossbar and the outer crossbar respectively have first and second rear surface portions, which rear surface portions face towards each other, and which rear surface portions each comprise a surface portion of maximum curvature adjoining a surface portion of minimum curvature. In a further or alternative embodiment, said rear surface portions are comprised of flat and/or convex surface portions. The same above advantages apply for both crossbars.

In a further or alternative embodiment, a division plane can be devised for conceptually dividing said fitting into an upper half and a lower half, latter division plane passing through said inner and outer crossbars, orthogonally to said first and second support surface portions, and orthogonally to said first and second rear surface portions. Advantageously, such a design is compatible with the drop forging method of production for metal fittings. Preferably, the fitting has about the same material mass above and below said division plane. The fitting may or may not comprise a metal. The fitting may or may not consist of a metal.

In a further or alternative embodiment, said inner crossbar has a larger cross-section than said outer crossbar. Indeed, the inner crossbar is subjected to a higher amount of loading forces, since it directly engages a lashing portion of the strap.

In a further or alternative embodiment, said crossbars are substantially straight, and said crossbars have a substantially invariant cross-section. This ensures that forces are equally distributed across the width of the strap, between the strap edges.

In a second aspect, the invention provides a lashing system comprising a strap and at least one strap fitting. In particular, said fitting may correspond to any of the fittings described above. Similar features and advantages may thus apply.

In a third aspect, the invention provides a lashing kit comprising one or more straps, and at least one strap fitting. In particular, said fitting may correspond to any of the fittings described above. Similar features and advantages may thus apply.

In a fourth aspect, the invention provides a method for securing a load using a strap and a corresponding strap fitting according to the first aspect, which fitting comprises opposite side walls with an inner crossbar and an outer crossbar extending therebetween, and wherein a lashing portion of the strap is led:
- along an input sense for the strap, towards said inner crossbar,
- curving around said inner crossbar, along said input sense,
- towards, and curving around said outer crossbar,
- diagonally back towards the inner crossbar, and
- curving around said inner crossbar, opposite to said input sense.

In particular, said lashing portion of the strap thereby acquires a progressively increasing curvature, along said input sense, and around said inner crossbar. The same advantages as discussed above may therefore apply.

The invention is further described by the following non-limiting examples and figures which further illustrate the invention, and which are not intended to, nor should they be interpreted to, limit the scope of the invention.

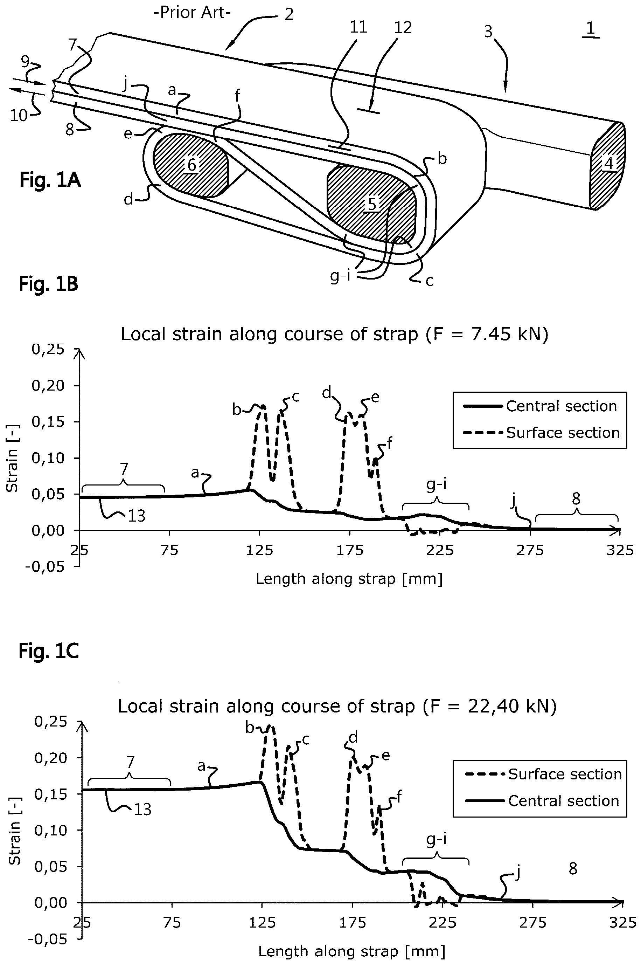

**Figure 1A** shows a partial cut of a prior art lashing system **1** comprising a strap **2** and a fitting **3.** The fitting **3** at least has one side wall **4** and two crossbars **5, 6.**

The strap **2** connects to the fitting **3** in a manner that is known per se: a "lashing portion" **7** of the strap **2** (e.g. stemming from the load to be lashed) is fed to the fitting **3,** along an input sense **9** for the strap **2.** Said lashing portion **7** subsequently runs towards and around the inner crossbar **5,** towards and around the outer crossbar **6,** then diagonally back towards the inner crossbar **5,** curving oppositely around the inner crossbar **5.** A "free portion" **8** of the strap **2** leaves the fitting **3** along an output sense **10.** In the vicinity of the inner crossbar **5,** latter free portion **8** is overlaid by the former, lashing portion **7.**

The inventors found that such prior art lashing systems **1** suffer from spikes in local stress and strain, acting on, and present in the strapping material. This finding is based, inter alia, on simulation analyses illustrated in Fig. 1B-C.

**Figures 1B-C** depict local strain along the course of the prior art strap **2** shown in Fig. 1A. The loading forces (acting on the lashing portion **7)** amount to 7.45 kN and 22.40 kN respectively. The local strain acting on a central section **11** of the strap **2** is indicated in uninterrupted line. The local strain acting on a surface section **12** of the strap **2** is indicated in dashed line.

As can be seen, in a central section of the strap **2,** there is an overall reduction of strain, along the course of the strap **2.** In Fig. 1B, the strap lashing portion **7** experiences a loading strain **13** of about 0.10, while the strap free portion **8** experiences no strain at all. In Fig. 1C, the strap lashing portion **7** experiences a loading strain **13** of about 0.15. Again, the strap free portion **8** has no strain. In short, there is an effective transfer of loading force, towards the strap fitting **3.** In particular, there is a significant general strain reduction whenever the strap **2** is led around a curved surface portion. See for instance curvatures **b-i.**

However, the inventors found great discrepancies between (a) the local strain in a central section **11** of the strap **2** and (b) the local strain in a surface section **12** of the strap **2.** While the local strain in the central section **11** is gradually lowered at curvatures **b-i,** the local strain rockets in the outer surface sections **12** (see for instance curvatures **b-f),** and plummets in the inner surface sections **12** (see for instance curvatures **g-i).** Indeed, the outer surface sections **12** are stretched at the curved surface portions, while the inner surface sections **12** are compressed. For an effective strapping thickness *t* of 1.3 mm, and a curvature radius *R* of 5 mm, the curvature strain is roughly calculated as *t*/2, or about 0.13. Latter value more or less corresponds to the height of peaks **b-f** in Fig. 1B and 1C.

In general, in relation to safety and effective lashing, the local stress and strain should at no point surpass the breaking stress and strain of the strapping material. This is particularly true for spikes in local stress and strain, at outer curvatures or serrations.

The inventors found that, due to spikes in local stress and strain, prior art strapping material is typically over-dimensioned. Traditionally, the strapping material is way stronger than required for handling the loading forces only. A further observation was that local spikes stress and strain are seriously threatening the strapping material lifetime.

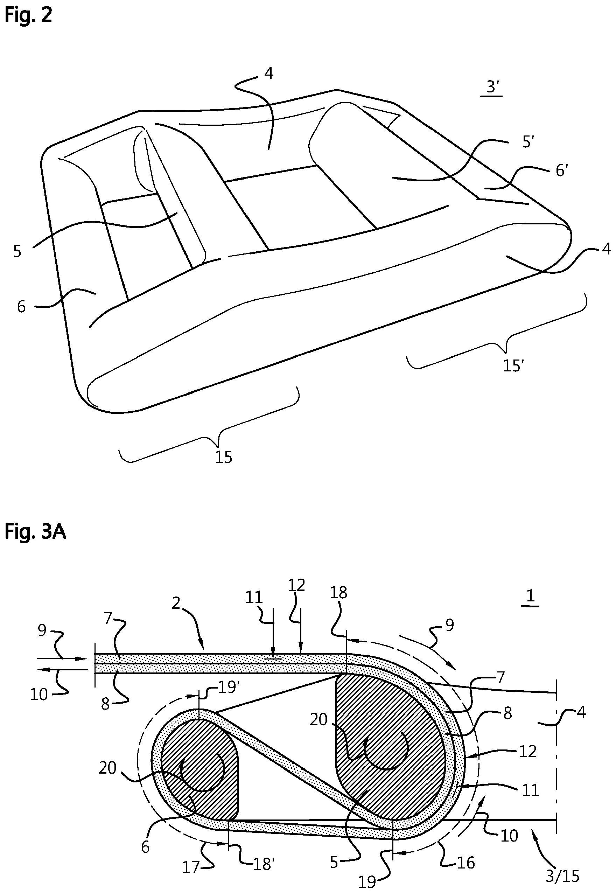

**Figure 2** gives a perspective view on a ladder buckle **3',** according to a possible embodiment of the invention. The ladder buckle **3'** comprises two opposite side walls **4** and four transverse crossbars **5, 6** extending therebetween. The crossbars **5, 6** are generally straight; and they have generally invariant transverse cross-sections (see also Fig. 3A).

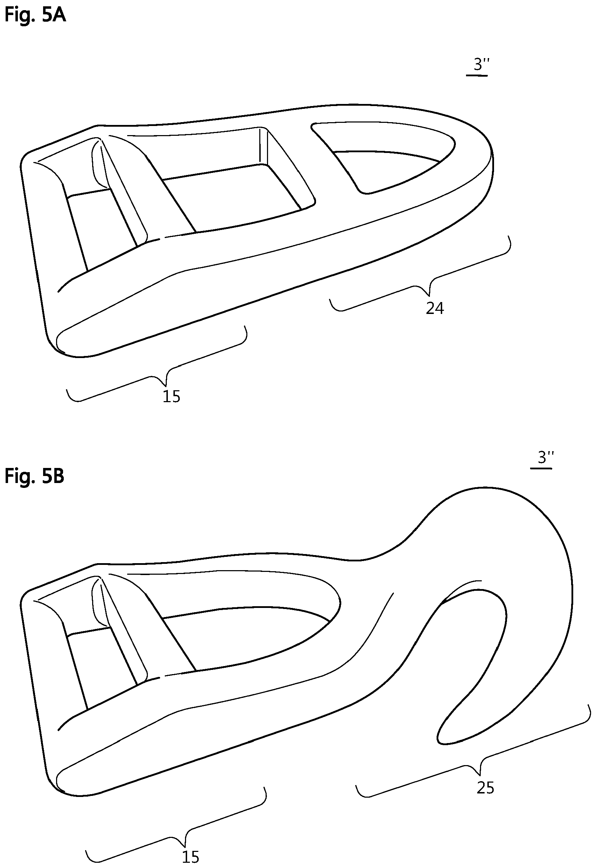

Such a ladder buckle **3'** is in fact a more specific embodiment of the fitting **3,** featuring two strap-admitting portions **15, 15'.** Alternatives, featuring only one strap-admitting portion are depicted in Fig. 5A-5B. Each of said strap-admitting portions **15, 15'** comprises an inner cross-bar **5, 5'** and an outer cross-bar **6, 6'.** The ladder buckle **3'** may thus be used as an intermediate strap fitting **3,** for interconnecting two strap ends **2, 2'** (not shown) in a lashing system **1.** To such end, both strap ends **2, 2'** may connect to corresponding strap-admitting portions **15, 15',** e.g. in a manner as shown in Fig. 1A.

**Figure 3A** gives a partial cross-sectional view on a lashing system **1** according to a possible embodiment of the invention. The lashing system **1** comprises a strap **2** connected to a strap fitting **3.** To such end, the strap fitting **3** has at least one strap-admitting portion **15,** comprised of an inner crossbar **5** and an outer crossbar **6.** These crossbars **5, 6** extend between a front side wall (not shown) and a back side wall **4** of the fitting **3.** The fitting **3** itself may or may not correspond to the fitting **3** of Fig. 2, or to any of the fittings **3** of Fig. 5A-B .

In accordance with the invention, the inner crossbar **5** defines a first support surface portion **16,** and the outer crossbar **6** defines a second support surface portion **17.** These support surface portions **16, 17** face away from each other. They are configured for supporting strapping material that is curved around the crossbars **5, 6.** The strap **2** is first led along an input sense **9** for the strap **2,** towards and around the inner crossbar **5.** It further runs towards and around the outer crossbar **6,** diagonally back to the inner crossbar **5,** and back around the inner crossbar **6,** in an output sense **10** that is opposite to said input sense **9.** At said first support surface portion **16,** a lashing portion **7** of the strap overlays a free portion **8** of the strap. The lashing portion **7** can be used for lashing a load (not shown), through application of a loading force. In its passage through the fitting **3,** the strap **2** conveniently transfers the loading force towards the fitting **2.**

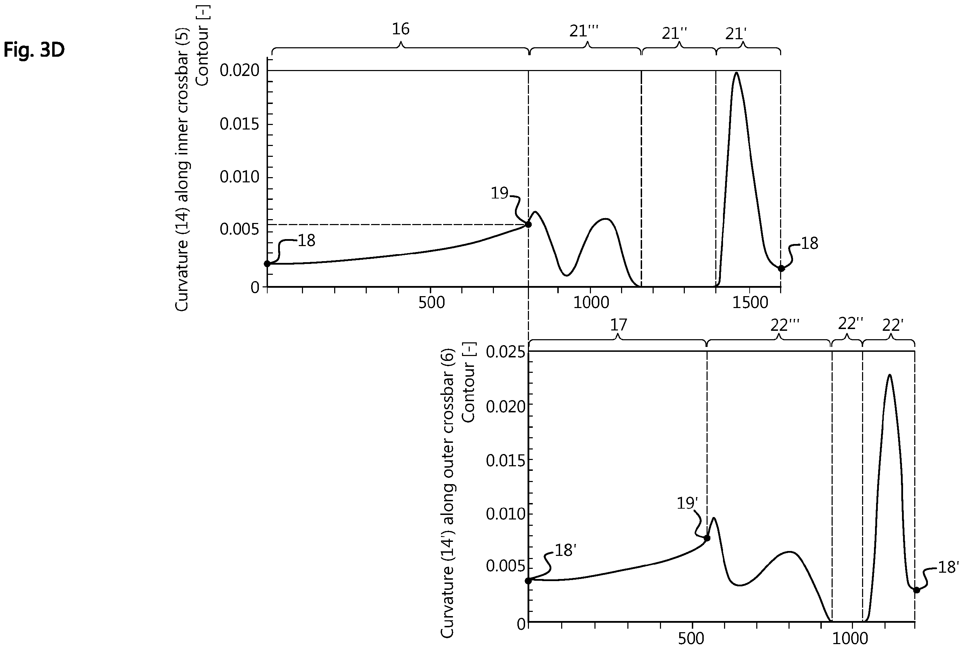

In particular, the first support surface portion **16** has a curvature that progressively increases, along the input sense **9** for the strap **2.** That is, the curvature value gradually rises from a lower onset curvature **18,** up to a higher end curvature **19.** See also Fig. 3D, depicting the cross-sectional contour curvature **14, 14'** of the inner and outer crossbars **5, 6** respectively.

As mentioned above, the lashing portion **7** of the strap **2** (entering the fitting **2)** is subjected to relatively high loading forces, while the free portion **10** of the strap **2** (exiting the fitting **3)** is subjected zero forces, or to low forces only. Therebetween, there is an overall stress reduction, along the course of the strap **2.** Loading forces are transferred towards the fitting **3.**

Within the context of Fig. 1A-B it has further been noted that a strong curvature may locally increase stress and strain, in outer surface sections **12** of the strap **2.** More specifically, stress and strain in the outer surface sections **12** are roughly increased with a surplus value, dependent on the local curvature value. Strongly curved surface portions (with only a small radius of curvature) may thus result high local stress and strain.

Quite advantageously, the present fitting **3** provides a lower onset curvature **18.** As such, in a region where the lashing portion **9** of the strap **2** is subjected a relatively high axial stress (mostly dictated by the loading force), the curvature is relatively low. The outer surface section **12** of the strap **2** thus only experiences a moderate surplus curvature stress, or none at all. As the lashing portion **7** of the strap **2** curves around the support surface portion **16,** axial stress present therein is gradually reduced. At the same time, the curvature progressively increases, up to a higher end curvature **19.** As such, the surplus curvature stress acting on the outer surface section **12** of the strap **2** is gradually raised. The total stress acting on the outer surface section **12** of the strap **2** is thus more uniform, through combination of a gradually decreasing loading stress and a gradually increasing curvature stress. Preferably, local spikes in stress and strain are avoided wherever possible. As a consequence, the strapping material can be made lighter and cheaper. Indeed, it does not need to cope with such local spikes in stress and strain.

As can be seen in Fig. 3A, also the second support surface portion **17** has a curvature **14' that** progressively increases, in the same rotational sense **20.** There is a steady increase, starting from an onset curvature **18',** and up to an end curvature **19'.** See also Fig. 3D. In particular, the end curvature **19** of the first support surface portion **16** is larger than the onset curvature **18'** of the second support surface portion **17.** As a result, strapping material curving around both the inner and outer crossbar **5, 6,** in said rotational sense **20,** will experience no local spikes in curvature stress and strain.

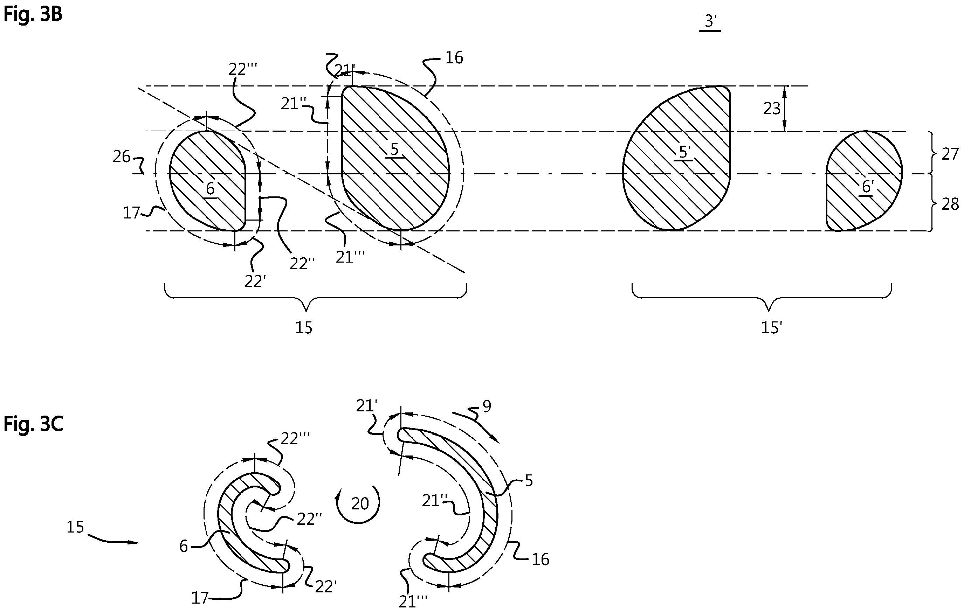

**Figure 3B** schematically illustrates a strap fitting **3,** more specifically a ladder buckle **3'** according to a possible embodiment, in cross-section. The strap fitting **3** comprises identical strap-admitting portions **15, 15'** which are oriented in mutually opposite directions. Both correspond to the embodiment of Fig. 3A. Only the left strap admitting portion **15** is further described below.

The inner crossbar **5,** on the one hand, has a first support surface portion **16** and a first rear surface portion **21.** In particular, said rear surface portion **21** comprises a flat surface portion **21"** (of minimum curvature), and a surface portion **21'** of maximum curvature, immediately preceding said first support surface portion **17.** The outer crossbar **5,** on the other hand, has a second support surface portion **16** and a second rear surface portion **22.** In particular, said rear surface portion **22** comprises a flat surface portion **22"** (of minimum curvature), and a surface portion **22'** of maximum curvature, immediately preceding said second support surface portion **17.**

In normal use, the surface portions **21', 22'** of maximum curvature will not contact the strap **2.** See also Fig. 3A. As such, they are not relevant for curvature stress and strain. However, they allow for reducing the overall crossbar cross-sections, especially when preceded by surface portions **21", 22"** of minimum curvature.

As can be seen on the figures, the inner crossbars **5, 5'** have a larger cross-section than the outer crossbars **6, 6'** have. In general, they need to withstand larger forces. Preferably, the inner crossbar **5** has a transverse offset **23** w.r.t. the outer crossbar **6.** As such, strap portions **7, 8** entering and exiting the fitting **3** will not interfere directly with the outer crossbar **5.** See also Fig. 3A. In the embodiment of Fig. 3B, the surface portions **21", 22"**of minimum curvature are substantially flat, and substantially parallel. The gap between the inner and outer crossbars **5, 6** is thus maximized. Preferably, said gap is minimally 10 mm. The distance between the inner crossbars **5, 5'** is preferably at least 20 mm. The latter allows for an easy handling.

As can be seen in Fig. 3B, a division plane **26** can be devised, by which the fitting **3** is conceptually divided into an upper half **27** and a lower half **28.** Latter division plane **26** passes through the inner and outer crossbars **5, 5', 6, 6'.** It is orthogonal to the first and second support surface portions **16, 17,** as well as to the first and second rear surface portions **21, 22.** Such a design is compatible with the fitting **3** production method of drop forging.

**Figure 3C** schematically illustrates a strap-admitting portion **15** of a fitting **3,** according to an alternative embodiment of the invention, in cross-section. The rear surface portions **21, 22** of the inner and outer crossbars **5, 6** comprise surface portions of negative curvature **21", 22".** That is, they comprise concave surface portions. This allows for reducing the crossbar cross-sections **5, 6** even further. However, such designs are no longer compatible with metal drop forging. For instance, such a fitting **3** could be produced via injection molding of a plastic.

**Figure 3D** graphically illustrates the curvature **14, 14',** along a cross-sectional contour of the inner and outer crossbars **5, 6** depicted in Fig. 3A-B. The curvature **14, 14'** is defined as the reciprocal value of the radius of curvature. Dimensionless values are depicted. Therefore, only the relative trends are important. The curvature of the inner and outer crossbars **5, 6** were optimized for obtaining a constant maximum total strain over the first support surface **16,** and for obtaining a maximum total strain over the second support surface **17** that is non-critical to the lashing system **1.**

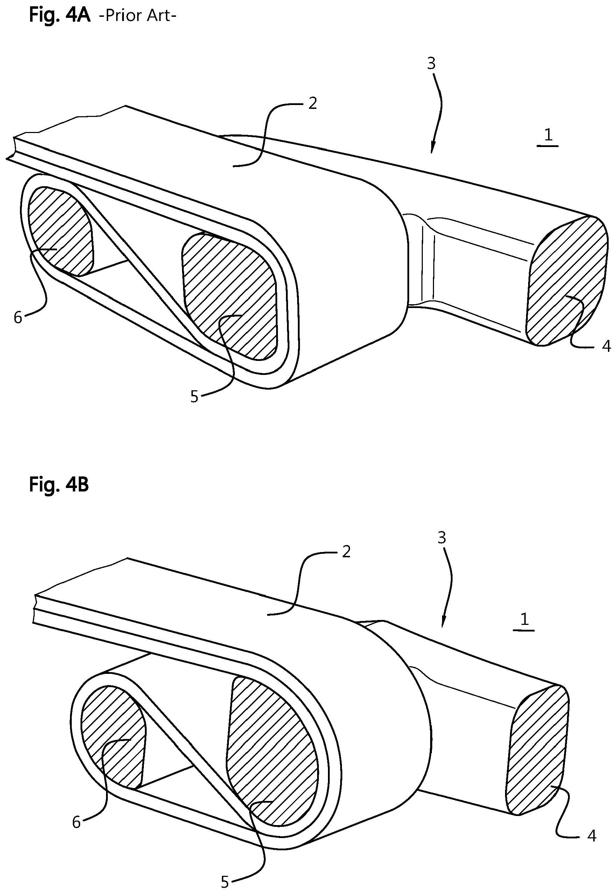

**Figures 4A-B** respectively show partial cuts of a prior art lashing system **1,** and of a lashing system **1** according to an embodiment of the invention. The latter has been optimized for stress distribution and deployment of materials.

The first fitting **3** (according to the prior art; Fig. 4A) has a weight of 236 g. The maximum curvature strain in the strap **2** amounts to 0.11. The second fitting **3** (according to the invention; Fig. AB) has a weight of 196 g. The maximum curvature strain amounts to 0.046. Due to its geometry, the second fitting **3** has about the same elasticity limit. Therefore, the lashing system **1** of Fig. 4B can be loaded to the same extent, using a strapping material **3** that is much lighter. Material costs of both the strap **2** and fitting **3** are reduced.

According to a possible embodiment, the fitting **3** may comprise a metal material having a tensile strength of between 730 and 840 Map, a yield strength of between 680 MPa and 720 MPA, and elongation at break of about 10%, and a Brinell Hardness of between 230 and 250 HB. The fitting **3** may be fabricated via drop forging. Preferably, the fitting **3** may be loaded up to about 25 kN.

**Figures 5A-B** show further, possible embodiments of strap fittings **3"** according to possible embodiments of the invention. Two end fittings **3"** are depicted. In particular, the strap-engaging portion **15** is combined with a further functionality such as a loop/eye **24** (Fig. 5A) or a hook **25** (Fig. 5B). The invention is not limited to any of these. In general, end strap fittings **3"** further comprising one or more ratchet portions, loop portions, hook portions, or any combination thereof are covered, in addition to intermediate strap fittings **3'** such as ladder buckles.

In general, the fitting according to the invention preferably has at least one strap-engaging portion that comprises the aforementioned inner and outer crossbars. This strap-engaging portion may be supplemented with:
- a further, similar strap-engaging portion in opposition, thereby providing a traditional ladder buckle (e.g. shown in Fig. 2),
- two or more further, similar strap-engaging portions extending in mutually different directions, thereby providing a multi-ladder buckle or star buckle (not shown),
- an eye portion, thereby providing an buckle eye (e.g. shown in Fig. 5A),
- a hook portion, thereby providing a buckle hook (e.g. shown in Fig. 5B), or
- a ratchet portion to which a strap end can be fed, and featuring some kind of additional tensioning mechanism for tensioning latter strap end, thereby providing a ratchet buckle (not shown).

The numbered elements on the figures are:
1. Lashing system
2. Strap
3. Fitting
4. Side wall
5. Inner crossbar
6. Outer crossbar
7. Lashing portion (of the strap)
8. Free portion (of the strap)
9. Input sense
10. Output sense
11. Central section
12. Surface section
13. Loading strain
14. Curvature
15. Strap-admitting portion
16. First support surface portion
17. Second support surface portion
18. Onset curvature
19. End curvature
20. Rotational sense
21. First rear surface portion
22. Second rear surface portion
23. Offset
24. Loop
25. Hook
26. Division plane
27. Upper half
28. Lower half

## Claims

1. A strap fitting (3) configured for engaging a strap (2), which fitting (3) comprises an inner crossbar (5) and an outer crossbar (6), said crossbars (5, 6) extending between opposite side walls (4) of the fitting (3), in which the inner and outer crossbars (5, 6) respectively have first and second support surface portions (16, 17), which support surface portions (16, 17) face away from each other, and which support surface portions (16, 17) are configured for supporting portions of strap (2) curving around said respective crossbars (5, 6), **characterized in that** the first support surface portion (16) has a curvature (14) that progressively increases, along an input sense (9) for the strap (2).

2. The fitting (3) of claim 1, wherein both the first and second support surface portions (16, 17) have curvatures (14, 14') that progressively increase, in the same rotational sense (20).

3. The fitting (3) of claim 2, wherein an end curvature (19) of the first support surface portion (16) is larger than, or equal to an onset curvature (18') of the second support surface portion (17).

4. The fitting (3) according to any of claims 1-3, wherein the inner crossbar (5) further has a surface portion of maximum curvature (21'), which surface portion of maximum curvature (21') adjoins said first support surface portion (16).

5. The fitting (3) of claim 4, wherein the inner crossbar (5) further has a surface portion of minimum curvature (21"), which surface portion of minimum curvature (21") adjoins said surface portion of maximum curvature (21').

6. The fitting (3) of claim 5, wherein said surface portion of minimum curvature (21") is a flat surface portion.

7. The fitting (3) according to any of claims 1-6, wherein the inner crossbar (5) and the outer crossbar (6) respectively have first and second rear surface portions (21, 22), which rear surface portions (21, 22) face towards each other, and which rear surface portions (21, 22) each comprise a surface portion of minimum curvature (21", 22") adjoining a surface portion of maximum curvature (21', 22').

8. The fitting (3) according to claim 7, wherein a division plane (26) can be devised for conceptually dividing said fitting (3) into an upper half (27) and a lower half (28), latter division plane (26) passing through said inner and outer crossbars (5, 6), orthogonally to said first and second support surface portions (16, 17), and orthogonally to said first and second rear surface portions (21, 22).

9. The fitting (3) according to any of the previous claims, wherein the fitting (3) is a ladder buckle (3'), a multi-ladder buckle, a buckle eye, a buckle hook, or a ratchet buckle.

10. The fitting (3) according to any of the previous claims, in which said inner crossbar (5) has a larger cross-section than said outer crossbar (6).

11. The fitting (3) according to any of the previous claims, wherein said crossbars (5, 6) are substantially straight, and wherein said crossbars (5, 6) have a substantially invariant cross-section.

12. The fitting (3) according to any of the previous claims, in which said fitting (3) comprises a metal.

13. A lashing system (1) comprising a strap (2) and at least one strap fitting (3), **characterized in that** said fitting (3) is that of one or more of claims 1-12.

14. A lashing kit comprising one or more straps (2) and at least one strap fitting (3), **characterized in that** said fitting (3) is that of one or more of claims 1-12.

15. A method for securing a load using a strap (2) and a corresponding strap fitting (3) according to any of the previous claims 1-12, which fitting (3) comprises opposite side walls (4) with an inner crossbar (5) and an outer crossbar (6) extending therebetween, and wherein a lashing portion (7) of the strap (2) is led:
- along an input sense (9) for the strap (2), towards said inner crossbar (5),
- curving around said inner crossbar (5), along said input sense (9),
- towards, and curving around said outer crossbar (6),
- diagonally back towards the inner crossbar (5), and
- curving around said inner crossbar (5), in opposition to said input sense (9),
**characterized in that** said lashing portion (7) acquires a progressively increasing curvature (14), along said input sense (9), around said inner crossbar (5).

## Patentansprüche

1. Gurthalter (3), dafür gestaltet, mit einem Gurt (2) in Eingriff zu stehen, wobei der Halter (3) eine innere Querstrebe (5) und ein äußere Querstrebe (6) umfasst, wobei sich die Querstreben (5, 6) zwischen gegenüberliegenden Seitenwandungen (4) des Halters (3) erstrecken, wobei die innere und die äußere Querstrebe (5, 6) jeweils einen ersten und einen zweiten Trageflächenabschnitt (16, 17) aufweisen, wobei die Trageflächenabschnitte (16, 17) voneinander weg weisen und wobei die Trageflächenabschnitte (16, 17) dafür gestaltet sind, Abschnitte des Gurtes (2) zu tragen, die sich um die entsprechenden Querstreben (5, 6) biegen, **dadurch gekennzeichnet, dass** der erste Trageflächenabschnitt (16) eine Krümmung (14) aufweist, die in einer Einführungsrichtung (9) des Gurtes (2) progressiv zunimmt.

2. Halter (3) nach Anspruch 1, wobei sowohl der erste als auch der zweite Trageflächenabschnitt (16, 17) eine Krümmung (14, 14') aufweist, die in der gleichen Drehrichtung (20) progressiv zunimmt.

3. Halter (3) nach Anspruch 2, wobei eine Endkrümmung (19) des ersten Trageflächenabschnitts (16) größer oder gleich einer Anfangskrümmung (18') des zweiten Trageflächenabschnitts (17) ist.

4. Halter (3) nach einem der Ansprüche 1 bis 3, wobei die innere Querstrebe (5) ferner einen Oberflächenabschnitt mit maximaler Krümmung (21') aufweist, wobei der Oberflächenabschnitt mit maximaler Krümmung (21') an den ersten Trageflächenabschnitt (16) grenzt.

5. Halter (3) nach Anspruch 4, wobei die innere Querstrebe (5) ferner einen Oberflächenabschnitt mit minimaler Krümmung (21") aufweist, wobei der Oberflächenabschnitt mit minimaler Krümmung (21") an den Oberflächenabschnitt mit maximaler Krümmung (21') grenzt.

6. Halter (3) nach Anspruch 5, wobei der Oberflächenabschnitt mit minimaler Krümmung (21") ein flacher Oberflächenabschnitt ist.

7. Halter (3) nach einem der Ansprüche 1 bis 6, wobei die innere Querstrebe (5) und die äußere Querstrebe (6) einen ersten beziehungsweise einen zweiten hinteren Oberflächenabschnitt (21, 22) aufweist, wobei die hinteren Oberflächenabschnitte (21, 22) zueinander hin weisen und wobei die hinteren Oberflächenabschnitte (21, 22) jeweils einen Oberflächenabschnitt mit minimaler Krümmung (21", 22") aufweisen, der an einen Oberflächenabschnitt mit maximaler Krümmung (21', 22') grenzt.

8. Halter (3) nach Anspruch 7, wobei eine Teilungsebene (26) konzipiert sein kann, um den Halter (3) gedanklich in eine obere Hälfte (27) und eine untere Hälfte (28) zu teilen, wobei letztgenannte Teilungsebene (26) durch die innere und die äußere Querstrebe (5, 6), rechtwinklig zu dem ersten und dem zweiten Trageflächenabschnitt (16, 17) und rechtwinklig zu dem ersten und dem zweiten hinteren Oberflächenabschnitt (21, 22) verläuft.

9. Halter (3) nach einem der vorhergehenden Ansprüche, wobei der Halter (3) eine Stegschnalle (3'), eine Mehrstegschnalle, eine Schnallenöse, ein Schnallenhaken oder eine Ratschenschnalle ist.

10. Halter (3) nach einem der vorhergehenden Ansprüche, wobei die innere Querstrebe (5) einen größeren Querschnitt als die äußere Querstrebe (6) aufweist.

11. Halter (3) nach einem der vorhergehenden Ansprüche, wobei die Querstreben (5, 6) im Wesentlichen gerade sind und wobei die Querstreben (5, 6) einen im Wesentlichen unveränderlichen Querschnitt aufweisen.

12. Halter (3) nach einem der vorhergehenden Ansprüche, wobei der Halter (3) ein Metall umfasst.

13. Zurrsystem (1), einen Gurt (2) und mindestens einen Gurthalter (3) umfassend, **dadurch gekennzeichnet, dass** der Halter (3) der nach einem oder mehreren der Ansprüche 1 bis 12 ist.

14. Zurrbausatz, einen oder mehrere Gurte (2) und mindestens einen Gurthalter (3) umfassend, **dadurch gekennzeichnet, dass** der Halte (3) der nach einem oder mehreren der Ansprüche 1 bis 12 ist.

15. Verfahren zum Sichern einer Last mit Hilfe eines Gurtes (2) und eines entsprechenden Gurthalters (3) nach einem der Ansprüche 1 bis 12, wobei der Halter (3) gegenüberliegende Seitenwandungen (4) mit einer inneren Querstrebe (5) und einer äußeren Querstrebe (6) umfasst, die sich dazwischen erstrecken, und wobei ein Zurrabschnitt (7) des Gurtes (2) wie folgt geführt wird:
- in einer Einführungsrichtung (9) des Gurtes (2) hin zu der inneren Querstrebe (5),
- in der Einführungsrichtung (9) rings um die innere Querstrebe (5),
- hin zur und rings um die äußere Querstrebe (6),
- diagonal zurück zur inneren Querstrebe (5) und
- entgegen der Einführungsrichtung (9) rings um die innere Querstrebe (5),
**dadurch gekennzeichnet, dass** der Zurrabschnitt (7) eine in der Einführungsrichtung (9) rings um die innere Querstrebe (5) progressiv zunehmende Krümmung erfordert.

## Revendications

1. Accessoire de sangle (3) conçu pour venir en prise avec une sangle (2), lequel accessoire (3) comprend une barre transversale intérieure (5) et une barre transversale extérieure (6), lesdites barres transversales (5, 6) s'étendant entre des parois latérales opposées (4) de l'accessoire (3), dans lequel les barres transversales intérieure et extérieure (5, 6) présentent respectivement une première et une seconde partie de surface de support (16, 17), lesquelles parties de surface de support (16, 17) sont opposées l'une à l'autre, et lesquelles parties de surface de support (16, 17) sont conçues pour supporter des parties de sangle (2) courbées autour desdites barres transversales respectives (5, 6), **caractérisé en ce que** la première partie de surface de support (16) présente une courbure (14) qui augmente progressivement, le long d'un sens d'entrée (9) pour la sangle (2).

2. Accessoire (3) selon la revendication 1, dans lequel les première et seconde parties de surface de support (16, 17) ont des courbures (14, 14') qui augmentent progressivement, dans le même sens de rotation (20).

3. Accessoire (3) selon la revendication 2, dans lequel une courbure d'extrémité (19) de la première partie de surface de support (16) est supérieure ou égale à une courbure de départ (18') de la seconde partie de surface de support (17).

4. Accessoire (3) selon l'une quelconque des revendications 1 à 3, dans lequel la barre transversale intérieure (5) a en outre une partie de surface de courbure maximale (21'), lequel partie de surface de courbure maximale (21') est adjacente à ladite première partie de surface de support (16).

5. Accessoire (3) selon la revendication 4, dans lequel la barre transversale intérieure (5) a en outre une partie de surface de courbure minimale (21"), lequel partie de surface de courbure minimale (21") est adjacente à ladite partie de surface de courbure maximale (21').

6. Accessoire (3) selon la revendication 5, dans lequel ladite partie de surface de courbure minimale (21") est une partie de surface plane.

7. Accessoire (3) selon l'une quelconque des revendications 1 à 6, dans lequel la barre transversale intérieure (5) et la barre transversale extérieure (6) ont respectivement de première et seconde parties de surface arrière (21, 22), lesquelles parties de surface arrière (21, 22) se font face, et lesquelles parties de surface arrière (21, 22) comprennent chacune une partie de surface de courbure minimale (21", 22") adjacente à une partie de surface de courbure maximale (21', 22').

8. Accessoire (3) selon la revendication 7, dans lequel un plan de division (26) peut être conçu pour diviser conceptuellement ledit accessoire (3) en une moitié supérieure (27) et une moitié inférieure (28), ce dernier plan de division (26) passant à travers lesdites barres transversales intérieure et extérieure (5, 6), orthogonalement auxdites première et seconde parties de surface de support (16, 17), et orthogonalement auxdites première et seconde parties de surface arrière (21, 22).

9. Accessoire (3) selon l'une quelconque des revendications précédentes, dans lequel l'accessoire (3) est une boucle à double barrette autobloquante (3'), une boucle à barrettes multiples, un oeillet de boucle, un crochet de boucle, ou une boucle à cliquet.

10. Accessoire (3) selon l'une quelconque des revendications précédentes, dans lequel ladite barre transversale intérieure (5) a une section transversale plus grande que ladite barre transversale extérieure (6).

11. Accessoire (3) selon l'une quelconque des revendications précédentes, dans lequel lesdites barres transversales (5, 6) sont sensiblement droites, et dans lequel lesdites barres transversales (5, 6) ont une section transversale sensiblement invariante.

12. Accessoire (3) selon l'une quelconque des revendications précédentes, dans lequel ledit accessoire (3) comprend un métal.

13. Système d'arrimage (1) comprenant une sangle (2) et au moins un accessoire de sangle (3), **caractérisé en ce que** ledit accessoire (3) est celle d'une ou plusieurs des revendications 1 à 12.

14. Kit d'arrimage comprenant une ou plusieurs sangles (2) et au moins un accessoire de sangle (3), **caractérisé en ce que** ledit accessoire (3) est celui d'une ou plusieurs des revendications 1 à 12.

15. Procédé pour arrimer une charge à l'aide d'une sangle (2) et d'un accessoire de sangle correspondant (3) selon l'une quelconque des revendications précédentes 1 à 12, lequel accessoire (3) comprend des parois latérales opposées (4) avec une barre transversale intérieure (5) et une barre transversale extérieure (6) s'étendant entre celles-ci, et dans lequel une partie d'arrimage (7) de la sangle (2) est amenée :
- le long d'un sens d'entrée (9) pour la sangle (2), vers ladite barre transversale intérieure (5),
- incurvée autour de ladite barre transversale intérieure (5), le long dudit sens d'entrée (9),
- vers, et incurvée autour de ladite barre transversale extérieure (6),
- en arrière en diagonale vers la barre transversale intérieure (5), et
- incurvée autour de ladite barre transversale intérieure (5), à l'opposé dudit sens d'entrée (9),
**caractérisé en ce que** ladite partie d'arrimage (7) acquiert une courbure (14) augmentant progressivement, le long dudit sens d'entrée (9), autour de ladite barre transversale intérieure (5).
